# EUROPÄISCHE PATENTANMELDUNG

(11) **EP 3 786 688 A1**
(43) Veröffentlichungstag der Anmeldung: **03.03.2021**
(21) Anmeldenummer: 19193829.9
(22) Anmeldetag: 27.08.2019
(51) Int. Cl.: G02C 13/00

(54) **BRILLENREINIGUNGSEINHEIT**

(71) Anmelder: MBNet AG, 8105 Regensdorf (CH)
(72) Erfinder: GARCIA, Loïc, 1446 Baulmes (CH)
(74) Vertreter: Clerc, Natalia

(57) **Zusammenfassung**

Eine Brillenreinigungseinheit weist einen Reinigungskörper (2) zur Reinigung von Brillengläsern auf, wobei der Reinigungskörper (2) zwei Taschen (20, 22) zur Aufnahme je eines Fingers einer Hand (H) eines Benützers auf. Die Brillenreinigungseinheit umfasst ferner eine Hülle (1), wobei die Hülle (1) zwei Klappen aufweist. Jede der zwei Klappen weist eine Tasche (10, 12) auf zur Aufnahme je einer der zwei Taschen (20, 22) des Reinigungskörpers (2). Die zwei Klappen sind gemeinsam mit dem in den Taschen (10, 12) der Hülle (1) aufgenommenen Reinigungskörper (2) aufeinander klappbar und umhüllen so den Reinigungskörper (2) annähernd vollständig. Die erfindungsgemässe Brillenreinigungseinheit ist einfach herstellbar, klein und kompakt und sie ermöglicht die Aufbewahrung und Benutzung des Reinigungskörpers ohne dass seine Reinigungsflächen mit den Fingern des Benützers in Kontakt kommen.

## Beschreibung

### TECHNISCHES GEBIET

Die vorliegende Erfindung betrifft eine Brillenreinigungseinheit.

### STAND DER TECHNIK

Brillen verschmutzen oft und müssen regelmässig gereinigt werden. Oft werden Krawatten, Schals oder sogar T-Shirts und ähnliches hierzu verwendet. Diese meist für die Reinigung ungeeigneten Materialien zerkratzen die Brillengläser und sie werden zudem selber verschmutzt. In den meisten Brillenetuis liegen spezielle Brillenreinigungstücher bereit. Diese sind jedoch nach mehrfachem Gebrauch ebenfalls nicht mehr allzu sauber und für die Reinigung somit nicht mehr geeignet.

Im Stand der Technik sind deshalb diverse Brillenreinigungseinheiten bekannt, die diese Nachteile beheben sollen. So offenbart GB 2 493 558 ein Brillentuch, das an einem Ring befestigt ist und von einer weichen Hülle mit Klettverschluss umgeben ist.

GB 2 453 980 offenbart ein Brillenreinigungspad, das aus einer Hülle herausgezogen und wieder in die Hülle hineingezogen werden kann.

JP H08248362 und KR 2003/01219 Y1 zeigen Glasreinigungstücher mit zwei Taschen für zwei Finger.

US 5 280 661 ist eine Reinigungseinheit mit zwei Taschen für zwei Finger offenbart, wobei mehrere Lagen Reinigungstücher auf der Rückseite angeordnet sind. Nach Gebrauch wird das zuoberst liegende Reinigungstuch entfernt und durch das nächstliegende, noch saubere untere Reinigungstuch ersetzt.

Diese Brillenreinigungseinheiten haben den Nachteil, dass ihre Reinigungsfläche nach wie vor mit schmutzigen und fettigen Fingern angefasst werden kann oder dass sie beim Aufbewahren, z.B. in einer Handtasche, nicht geschützt ist.

### DARSTELLUNG DER ERFINDUNG

Es ist deshalb eine Aufgabe der Erfindung, eine tragbare Brillenreinigungseinheit zu schaffen, die klein und kompakt ist und deren Reinigungsfläche vor Verschmutzung bei der Aufbewahrung und durch Finger des Benützers geschützt ist.

Diese Aufgabe löst eine Brillenreinigungseinheit mit den Merkmalen des Anspruchs 1.

Die erfindungsgemässe Brillenreinigungseinheit weist einen Reinigungskörper zur Reinigung von Brillengläsern auf, wobei der Reinigungskörper zwei Taschen zur Aufnahme je eines Fingers einer Hand eines Benützers aufweist. Die Brillenreinigungseinheit umfasst ferner eine Hülle, wobei die Hülle zwei Klappen aufweist und wobei jede der zwei Klappen eine Tasche aufweist zur Aufnahme je einer Tasche des Reinigungskörpers. Die zwei Klappen sind gemeinsam mit dem in den Taschen der Hülle aufgenommenen Reinigungskörper aufeinander klappbar, so dass sie den Reinigungskörper annähernd vollständig umhüllen.

Dadurch ist der Reinigungskörper grundsätzlich geschützt, wenn er aufbewahrt wird, z.B. in einer Hosentasche oder einer Handtasche. Dank seiner zwei Taschen für die Finger des Benützers lässt sich der Reinigungskörper auf einfache Art und Weise aus seiner Hülle entfernen und wieder in seine Hülle hineinschieben, ohne dass seine Reinigungsfläche vom Benützer angefasst wird. Da die Klappen aufeinander klappbar sind, können das Einführen und das Herausziehen des Reinigungskörpers auf einfache Weise erfolgen und die Hülle lässt sich einfach in ihren schützenden Zustand bringen.

Der Reinigungskörper wird immer gleich angefasst. Die Reinigungsfläche ist eindeutig erkennbar und muss somit nie von Hand angefasst werden.

Die Brillenreinigungseinheit lässt sich zudem kostengünstig herstellen und bietet eine grosse Gestaltungsfreiheit in den Formen, den Materialien und Farben. Die Einheit lässt sich relativ dünn ausbilden, so dass sie auch in einer Hosentasche getragen werden kann.

Vorzugsweise sind die zwei Taschen des Reinigungskörpers gleichzeitig in die zwei Taschen der Hülle schiebbar, wenn in die zwei Taschen des Reinigungskörpers zwei Finger einer Hand eingeschoben sind. Vorzugsweise sind die zwei Taschen des Reinigungskörpers gleichzeitig aus den zwei Taschen der Hülle herausnehmbar, wenn in die zwei Taschen des Reinigungskörpers zwei Finger einer Hand eingeschoben sind. Vorzugsweise ist der so herausgezogene Reinigungskörper ohne weiteres Umgreifen oder Anfassen bereit für eine Reinigung der Brillengläser. Diese Merkmale erleichtern jeweils die Handhabung.

In bevorzugten Ausführungsformen lassen sich die zwei Taschen des Reinigungskörpers mittels der in die Taschen des Reinigungskörpers eingeschobenen Finger zueinander bewegen. Der Reinigungskörper ist somit sofort zum Reinigen der Brillengläser bereit.

Damit die Hülle auch während eines Transports den Reinigungskörper genügend schützt, sind die zwei Klappen der Hülle in bevorzugten Ausführungsformen in ihrer aufeinander geklappten Lage fixiert oder fixierbar. Vorzugsweise erfolgt dies magnetisch. In bevorzugten Ausführungsformen ist mindestens ein Magnet vorhanden, wobei die zwei Klappen mittels des mindestens einen Magneten in ihrer aufeinander geklappten Lage fixierbar sind. Je nach Ausführungsform ist hierfür in oder an einem freien Ende einer ersten Klappe ein Magnet und in oder an einem freien Ende der zweiten Klappe ebenfalls ein Magnet oder ein magnetisches Metall angeordnet.

Der Reinigungskörper weist vorzugsweise mindestens eine Reinigungsfläche zur Reinigung der Brillengläser auf und vorzugsweise weist jede Tasche des Reinigungskörpers eine Öffnung zur Aufnahme des Fingers auf. In bevorzugten Ausführungsformen sind zwei Reinigungsflächen vorhanden, wobei sich je eine der zwei Reinigungsflächen auf der der Öffnung gegenüberliegenden Seite je einer der Taschen des Reinigungskörpers befindet.

In einer besonders einfach herstellbaren, einfach handhabbaren und kostengünstig herstellbaren Ausführungsform liegen die zwei Öffnungen der Taschen des Reinigungskörpers im auseinandergeklappten Zustand in einer Ebene und sie erstrecken sich in einander entgegengesetzte Richtungen.

Vorzugsweise sind auch die Klappen als Taschen ausgebildet. Vorzugsweise weisen diese Taschen dieselbe Form auf wie die Taschen des Reinigungskörpers und/oder vorzugsweise sind diese Taschen leicht grösser als die Taschen des Reinigungskörpers. Dies ergibt eine optimale Aufnahme des Reinigungskörpers in der Hülle und minimiert die Grösse der Einheit.

Die Taschen sind vorzugsweise so geformt, dass sie sich zu ihrem freien geschlossenen Ende hin verjüngen. Sie können jedoch auch einen rechteckigen, ovalen oder einen anderen Grundriss aufweisen.

Vorzugsweise weist jede Tasche der Hülle eine Öffnung zur Aufnahme je einer der Taschen des Reinigungskörpers auf, wobei die zwei Öffnungen der zwei Taschen der Hülle im auseinandergeklappten Zustand in einer Ebene liegen und sich in einander entgegengesetzte Richtungen erstrecken.

Die Hülle kann aus einem steifen Material, beispielsweise aus Kunststoff oder Metall gefertigt sein. Vorzugsweise ist sie jedoch aus einem halbsteifen Material, wie beispielsweise Kork, oder noch bevorzugter aus einem weichen Material, beispielsweise aus einem textilen Material oder Leder, gefertigt.

Der Reinigungskörper kann aus einem porösen Material, wie beispielsweise einem Schwamm, gefertigt sein. Vorzugsweise ist er aus einem Reinigungstuch gefertigt, wie es üblicherweise zur Reinigung von Brillengläsern verwendet wird und aus dem Stand der Technik bekannt ist.

Die Hülle und der Reinigungskörper sind je nach Ausführungsform einstückig ausgebildet und beispielsweise in ihrer Form genäht, verschweisst oder geklebt sein. In anderen Ausführungsformen sind sie auch aus mehreren Teilen zusammengesetzt und beispielsweise vernäht, verschweisst oder verklebt.

Die Hülle ist je nach Ausführungsform mit einem Befestigungsmittel zur Befestigung an einer Tasche, einem Gürtel oder Ähnlichem ausgebildet. Sie kann hierzu eine Schlaufe, einen Ring oder Ähnliches aufweisen.

Weitere Ausführungsformen sind in den abhängigen Ansprüchen angegeben.

### KURZE BESCHREIBUNG DER ZEICHNUNGEN

Eine bevorzugte Ausführungsform der Erfindung ist im Folgenden anhand der Zeichnungen beschrieben, die lediglich zur Erläuterung dienen und nicht einschränkend auszulegen sind. In den Zeichnungen zeigen:
- Figur 1: eine Ansicht einer Hülle der erfindungsgemässen Brillenreinigungseinheit von einer ersten Seite im auseinandergeklappten Zustand;
- Figur 2: eine Ansicht eines Reinigungskörpers der erfindungsgemässen Brillenreinigungseinheit von einer ersten Seite im auseinandergeklappten Zustand;
- Figur 3: eine Ansicht der Hülle gemäss Figur 1 von einer gegenüberliegenden Seite im auseinandergeklappten Zustand;
- Figur 4: eine Ansicht des Reinigungskörpers gemäss Figur 2 von einer gegenüberliegenden Seite im auseinandergeklappten Zustand;
- Figur 5: eine Ansicht der Hülle gemäss Figur 1 im zusammengeklappten Zustand von oben;
- Figur 6: eine Seitenansicht der Hülle gemäss Figur 5 im zusammengeklappten Zustand;
- Figur 7: eine Ansicht der Reinigungseinheit mit der Hülle gemäss Figur 1 und dem Reinigungskörper gemäss Figur 2, wobei der Reinigungskörper in der Hülle eingeführt ist;
- Figur 8: eine Ansicht der zusammengeklappten Hülle mit eingeführtem Reinigungskörper gemäss Figur 7;
- Figur 9: den Reinigungskörper gemäss Figur 2, erfasst von zwei Fingern einer Hand eines Benützers;
- Figur 10: der Reinigungskörper gemäss Figur 9 während der Reinigung einer Brille;
- Figur 11: den Reinigungskörper und die Hülle vor dem Einführen in die Hülle;
- Figur 12: den Reinigungskörper und die Hülle während des Einführens in die Hülle;
- Figur 13: den Reinigungskörper und die Hülle nach erfolgtem Einführen in die Hülle;
- Figur 14: die aufgeklappte Brillenreinigungseinheit mit Hülle und eingeführtem Reinigungskörper;
- Figur 15: die auseinandergeklappte Brillenreinigungseinheit und
- Figur 16: die zusammengeklappte Brillenreinigungseinheit, bereit zur Aufbewahrung.

### BESCHREIBUNG BEVORZUGTER AUSFÜHRUNGSFORMEN

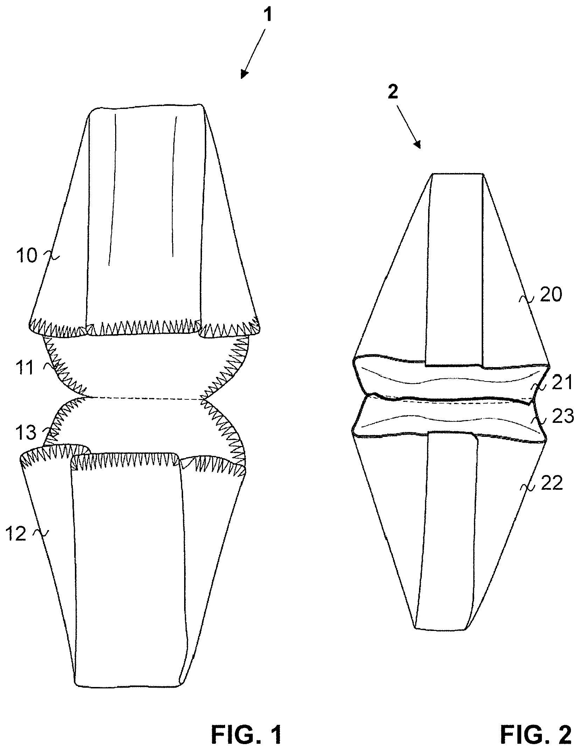

In den Figuren 1 bis 16 ist eine bevorzugte Ausführungsform der erfindungsgemässen Reinigungseinheit dargestellt. Sie weist eine Hülle 1 (Figur 1) und einen Reinigungskörper 2 (Figur 2) auf. Beide Elemente weisen eine ähnliche Form auf, wobei die Hülle 1 leicht grösser ausgebildet ist als der Reinigungskörper 2. Sie sind vorzugsweise aus einem weichen Material gefertigt, beispielsweise aus einem textilen Material oder aus Leder. Der Reinigungskörper 2 ist vorzugsweise aus einem für die Brillenreinigung geeigneten Material, insbesondere nicht abrasiv, gefertigt.

Vorzugsweise sind die Hülle 1 und der Reinigungskörper 2 je aus einem einstückigen Material ausgebildet und weisen einen entsprechenden Zuschnitt auf. Sie sind vorzugsweise in ihre Form gefaltet und durch Nähte und/oder Klebelinien und/oder Verschweissungen in ihrer gefalteten Form gehalten. Je nach gewähltem Material sind die Ränder verstärkt. Im hier dargestellten Beispiel sind die Ränder der Hülle 1 durch eine Naht, hier eine sogenannte Zick-Zack-Naht, verstärkt.

Die Hülle 1 und der Reinigungskörper 2 weisen je zwei Taschen 10, 12, 20, 22 auf. Sie bilden jeweils zusammen mit ihren zugehörigen Rückseiten 11, 13, 21, 23 eine Öffnung auf. Die Rückseiten 11, 13, 21, 23 grenzen jeweils aneinander und gehen vorzugsweise einstückig oder mittels einer Verbindungsnaht ineinander über. Dieser Übergang ergibt den Zugangsbereich zum Eingreifen in die einander gegenüberliegenden zwei Öffnungen.

Das Material der Hülle 1 und des Reinigungskörpers 2 ist im Bereich der Taschen 10, 12, 20, 22 vorzugsweise gefaltet, so dass sich die Taschen leicht öffnen lassen. Das Material und die jeweilige Faltung sind vorzugsweise so bemessen, dass in die Taschen 20, 22 des Reinigungskörpers 2 je ein Finger eines erwachsenen Benützers einfach Platz findet. Die Taschen 10, 12 der Hülle 1 sind vorzugsweise so bemessen, dass die Taschen 20, 22 des Reinigungskörpers 2 mitsamt den darin eingeführten Fingern des Benützers Platz finden.

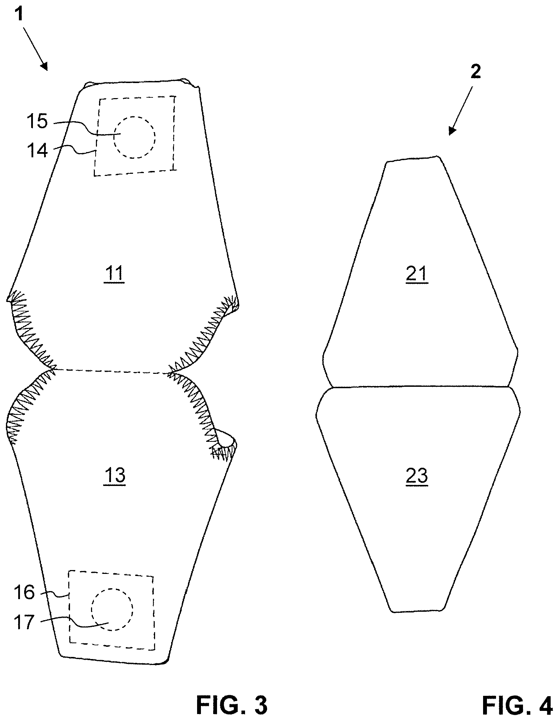

In den Figuren 3 und 4 sind die jeweiligen Rückseiten 11, 13, 21, 23 der Hülle 1 und des Reinigungskörpers 2 erkennbar. Die Rückseiten 11, 13, 21, 23 fluchten vorzugsweise jeweils mit ihrem Partner und bilden eine plane Fläche. Die Rückseiten 21, 23 der Hülle 2 sind als Reinigungsflächen ausgebildet. Ist der gesamte Reinigungskörper 2 aus einem für die Reinigung geeignetem Material ausgebildet, so weisen diese Rückseiten 21, 23 vorzugsweise einfach keine Nähte oder kratzenden Erhebungen auf. Ist der Reinigungskörper 2 an sich aus einem anderen Material gefertigt, so ist zumindest ein Teil mindestens einer der Rückseiten 21, 23, vorzugsweise beider Rückseiten 21, 23, aus einem Material gefertigt, das zur Reinigung der Brillengläser geeignet ist. Dieses Material kann beispielsweise in Form eines Einsatzes in den restlichen Reinigungskörper 2 eingebracht sein oder in Form einer Applikation auf einen Grundkörper des Reinigungskörpers 2 aufgebracht sein.

Wie in Figur 3 erkennbar ist, weisen die Rückseiten 11, 13 der Hülle 1 je eine geschlossene Kammer 14, 16 auf. Diese sind beispielsweise durch innen- oder aussenseitig aufgenähte, angeklebte oder angeschweisste Applikationen gebildet. In diesen Kammern 14, 16 ist je ein Magnet 15 oder ein Magnet in einer Kammer und ein magnetisches Metall 17 in der anderen Kammer angeordnet.

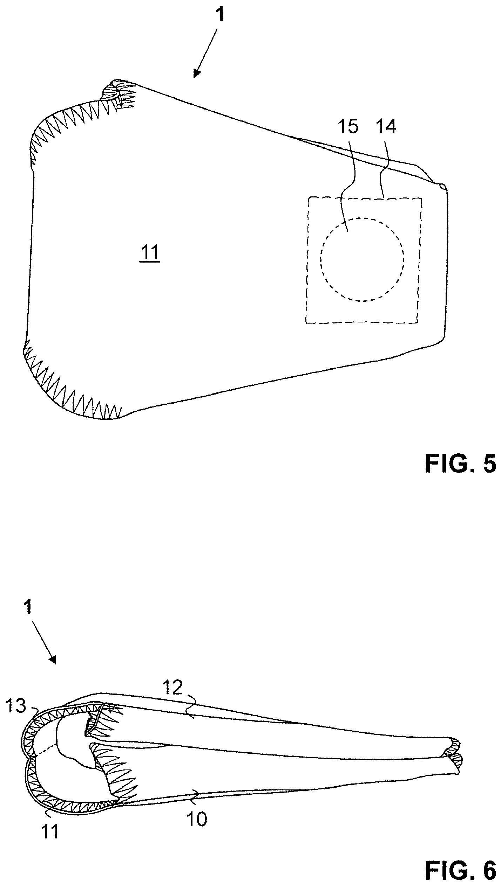

Die zwei Taschen der Hülle 1 bilden mit ihren Rückseiten je eine Klappe. Wird die Hülle 1, wie dies in den Figuren 5 und 6 dargestellt ist, zusammengeklappt, liegen die zwei Kammern 14, 16 übereinander und die zwei Klappen werden somit magnetisch in ihrer Position fixiert. In anderen Ausführungsformen wird die Hülle 1 auf andere Art und Weise in ihrer zusammengeklappten Lage gehalten, beispielsweise mittels eines Druckknopfes, einer Schlaufe, eines Bandes oder anderen Mitteln.

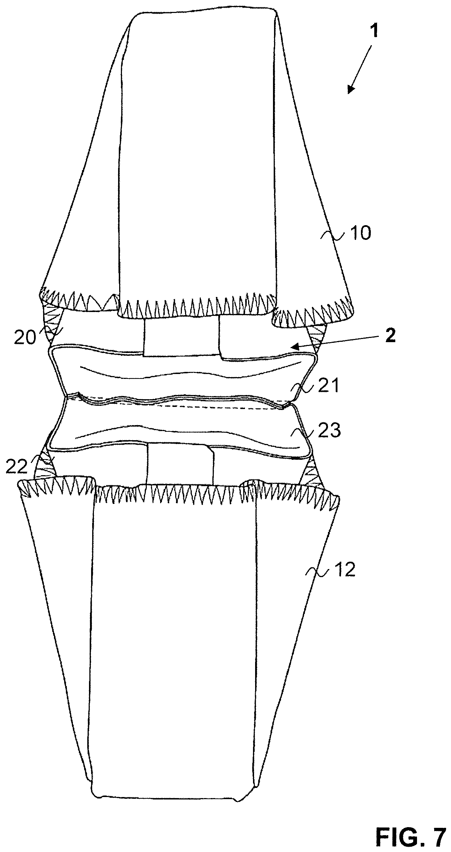

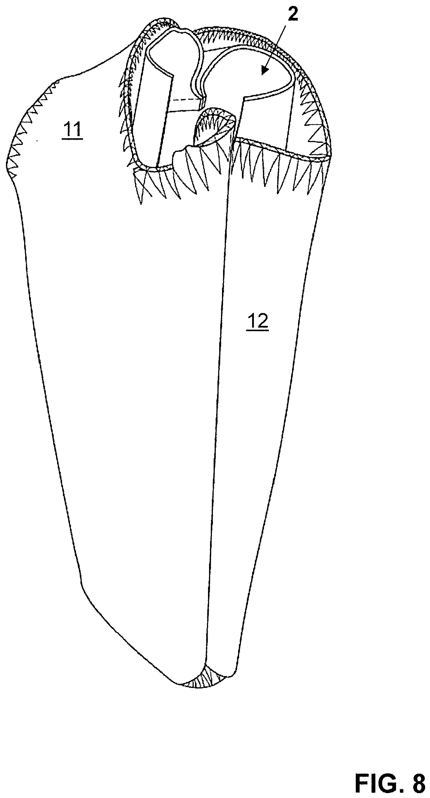

In Figur 7 ist der Reinigungskörper 2 in die Hülle 1 eingeschoben. In Figur 8 ist erkennbar, wie sich der eingeschobene Reinigungskörper 2 gemeinsam mit der Hülle 1 zusammenklappen lässt und wie er im zusammengeklappten Zustand von der Hülle 1 annähernd vollständig umhüllt und geschützt ist.

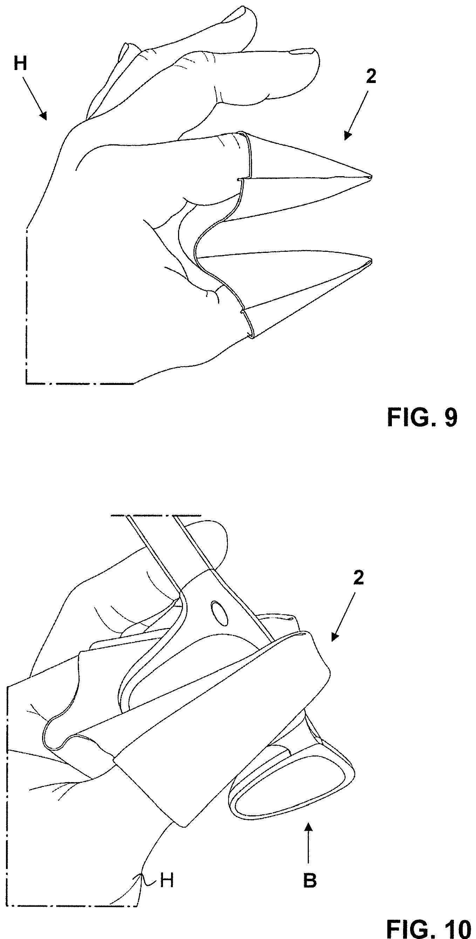

In den Figuren 9 und 10 ist erkennbar, wie der erfindungsgemässe Reinigungskörper 2 benützt wird. Der auf zwei Finger, vorzugsweise Daumen und Zeigefinger, der Hand H des Benützers aufgesteckte Reinigungskörper 2 wird auf beiden Seiten eines Brillenglases einer Brille B angelegt und es wird gerieben, bis das Glas wieder sauber ist. Da die zwei Reinigungsflächen des Reinigungskörpers 2 von Hand nie angefasst werden müssen und bei Nichtgebrauch in der Hülle 1 geschützt sind, sind sie fettfrei und frei von anderen Verschmutzung, insbesondere abrasiven Teilchen.

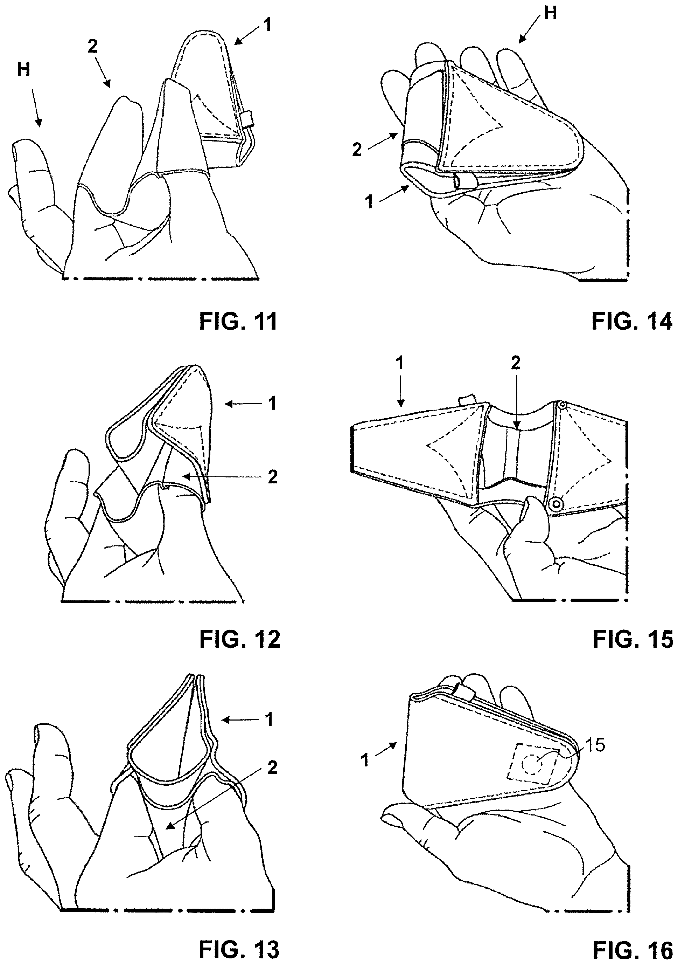

In den Figuren 11 bis 16 ist unter Darstellung der Hand H des Benützers dargestellt, wie der Reinigungskörper 2 nach Gebrauch wieder in die Hülle 1 versorgt werden kann, ohne die Reinigungsflächen zu verschmutzen. Sollte der Reinigungskörper 2 beim Reinigen der Brille B zu fest verschmutzt worden sein, so lässt er sich waschen (von Hand oder in einer Waschmaschine) und zwischenzeitlich lässt sich ein anderer Reinigungskörper gleicher Machart in die Hülle 1 versorgen.

In Figur 11 befindet sich der Reinigungskörper 2 noch im Gebrauchszustand über den zwei Fingern der Hand H. Die Hülle 1 ist umgeklappt, also vollständig geöffnet. Vorzugsweise halten die übereinanderliegenden Magnete 15, 17 sie in dieser Position. In Figur 12 wird er in die Hülle eingesteckt, wobei beide Taschen 20, 22 des Reinigungskörpers 2 gleichzeitig in die jeweilige Tasche 10, 12 der Hülle 1 eingeschoben werden, in Figur 13 sind die Taschen 20, 22 des Reinigungskörpers 2 vollständig eingesteckt und die Finger können nun herausgezogen werden.

Die Hülle 1 mit dem eingesteckten Reinigungskörper 2 ist gemäss Figur 14 nach wie vor im umgeklappten und vollständig geöffneten Zustand. Der Übergangsbereich des Reinigungskörpers 2 liegt frei, wobei es sich nicht um die Seite der Reinigungsflächen handelt und somit bedenkenlos exponiert sein kann. Die Hülle 1 wird nun gemeinsam mit dem eingesteckten Reinigungskörper 2 zugeklappt, wie dies in den Figuren 15 und 16 erkennbar ist. Die Magnete 15, 17 halten die Brillenreinigungseinheit in ihrer geschlossenen Position.

Die erfindungsgemässe Brillenreinigungseinheit ist einfach herstellbar, klein und kompakt und sie ermöglicht die Aufbewahrung und Benutzung des Reinigungskörpers ohne dass seine Reinigungsflächen mit den Fingern des Benützers in Kontakt kommen.

**BEZUGSZEICHENLISTE**

| | | | |
|---|---|---|---|
| 1 | Hülle | 2 | Reinigungskörper |
| 10 | erste Tasche | 20 | erste Tasche |
| 11 | erste Rückseite | 21 | erste Rückseite |
| 12 | zweite Tasche | 22 | zweite Tasche |
| 13 | zweite Rückseite | 23 | zweite Rückseite |
| 14 | erste Kammer | | |
| 15 | erster Magnet | H | Hand |
| 16 | zweite Kammer | B | Brille |
| 17 | zweiter Magnet | | |

## Patentansprüche

1. Brillenreinigungseinheit mit einem Reinigungskörper (2) zur Reinigung von Brillengläsern, wobei der Reinigungskörper (2) zwei Taschen (20, 22) zur Aufnahme je eines Fingers einer Hand (H) eines Benützers aufweist, **dadurch gekennzeichnet, dass** die Brillenreinigungseinheit ferner eine Hülle (1) umfasst, wobei die Hülle (1) zwei Klappen aufweist, dass jede der zwei Klappen eine Tasche (10, 12) aufweist zur Aufnahme je einer der zwei Taschen (20, 22) des Reinigungskörpers (2) und dass die zwei Klappen gemeinsam mit dem in den Taschen (10, 12) der Hülle (1) aufgenommenen Reinigungskörper (2) aufeinander klappbar sind und so den Reinigungskörper (2) annähernd vollständig umhüllen.

2. Brillenreinigungseinheit nach Anspruch 1, wobei die zwei Taschen (20, 22) des Reinigungskörpers (2) gleichzeitig in die zwei Taschen (10, 12) der Hülle (1) schiebbar sind, wenn in die zwei Taschen (20, 22) des Reinigungskörpers (2) zwei Finger der Hand (H) eingeschoben sind.

3. Brillenreinigungseinheit nach einem der Ansprüche 1 oder 2, wobei die zwei Taschen (20, 22) des Reinigungskörpers (2) gleichzeitig aus den zwei Taschen (10, 12) der Hülle (1) herausnehmbar sind, wenn in die zwei Taschen (20, 22) des Reinigungskörpers (2) zwei Finger der Hand (H) eingeschoben sind.

4. Brillenreinigungseinheit nach Anspruch 3, wobei der so herausgezogene Reinigungskörper (2) ohne weiteres Umgreifen oder Anfassen bereit für eine Reinigung der Brillengläser ist.

5. Brillenreinigungseinheit nach einem der Ansprüche 1 bis 4, wobei die zwei Taschen (20, 22) des Reinigungskörpers (2) mittels der in die Taschen (20, 22) des Reinigungskörpers (2) eingeschobenen Finger zueinander bewegbar sind.

6. Brillenreinigungseinheit nach einem der Ansprüche 1 bis 5, wobei die zwei Klappen der Hülle (1) in ihrer aufeinander geklappten Lage fixiert sind oder fixierbar sind.

7. Brillenreinigungseinheit nach Anspruch 6, wobei mindestens ein Magnet (15, 17) vorhanden ist und wobei die zwei Klappen mittels des mindestens einen Magneten (15, 17) in ihrer aufeinander geklappten Lage fixierbar sind.

8. Brillenreinigungseinheit nach einem der Ansprüche 1 bis 7, wobei der Reinigungskörper (2) mindestens eine Reinigungsfläche zur Reinigung der Brillengläser aufweist.

9. Brillenreinigungseinheit nach einem der Ansprüche 1 bis 8, wobei jede Tasche (20, 22) des Reinigungskörpers (2) eine Öffnung zur Aufnahme des Fingers aufweist.

10. Brillenreinigungseinheit nach den Ansprüche 8 und 9, wobei zwei Reinigungsflächen vorhanden sind und wobei sich je eine der zwei Reinigungsflächen auf der der Öffnung gegenüberliegenden Seite je einer der Taschen (20, 22) des Reinigungskörpers (2) befindet.

11. Brillenreinigungseinheit nach einem der Ansprüche 9 oder 10, wobei die zwei Öffnungen der Taschen (20, 22) des Reinigungskörpers (2) im auseinandergeklappten Zustand in einer Ebene liegen und sich in einander entgegengesetzte Richtungen erstrecken.

12. Brillenreinigungseinheit nach einem der Ansprüche 1 bis 11, wobei die Klappen als Taschen (10, 12) ausgebildet sind.

13. Brillenreinigungseinheit nach einem der Ansprüche 1 bis 12, wobei jede Tasche (10, 12) der Hülle (1) eine Öffnung zur Aufnahme je einer der Taschen (20, 22) des Reinigungskörpers (2) aufweist und wobei die zwei Öffnungen der zwei Taschen (10, 12) der Hülle (1) im auseinandergeklappten Zustand in einer Ebene liegen und sich in einander entgegengesetzte Richtungen erstrecken.

14. Brillenreinigungseinheit nach einem der Ansprüche 1 bis 13, wobei die Hülle (1) aus einem weichen Material gefertigt ist.

15. Brillenreinigungseinheit nach einem der Ansprüche 1 bis 13, wobei der Reinigungskörper (2) aus einem Reinigungstuch gefertigt ist.
